# EUROPEAN PATENT APPLICATION

(11) **EP 4 398 630 A1**
(43) Date of publication of application: **10.07.2024**
(21) Application number: 22863235.2
(22) Date of filing: 23.08.2022
(51) Int. Cl.: H04W 28/20

(54) **TRANSMISSION PROCESSING METHOD AND APPARATUS, TERMINAL, AND STORAGE MEDIUM**

(30) Priority: 30.08.2021 CN 202111005804
(71) Applicant: Vivo Mobile Communication Co., Ltd., Dongguan, Guangdong 523863 (CN)
(72) Inventor: PENG, Shuyan, Dongguan, Guangdong 523863 (CN); JI, Zichao, Dongguan, Guangdong 523863 (CN); LIU, Siqi, Dongguan, Guangdong 523863 (CN); WANG, Huan, Dongguan, Guangdong 523863 (CN)
(74) Representative: Lavoix
(86) International application number: PCT/CN2022/114235
(87) International publication number: WO 2023/030096

(57) **Abstract**

This application discloses a transmission processing method and apparatus, a terminal, and a storage medium, and pertains to the field of communications technologies. The transmission processing method according to an embodiment of this application includes: determining, by a terminal, first resource information for first data, the first resource information being used to re-evaluate or preempt a target resource, where the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part; a power saving mode of the terminal; a power level of the terminal; a discontinuous reception configuration of the terminal; third resource information configured or indicated in the resource pool; or information related to second data, the second data being different from the first data.

## Description

### CROSS-REFERENCE TO RELATED APPLICATIONS

This application claims priority to Chinese Patent Application No. 202111005804.7, filed in China on August 30, 2021, which is incorporated herein by reference in its entirety.

### TECHNICAL FIELD

This application pertains to the field of communications technologies, and particularly relates to a transmission processing method and apparatus, a terminal, and a storage medium.

### BACKGROUND

It is well known that in sidelink (Sidelink, SL) transmission, terminals typically use a full sensing (full sensing) mechanism for resource selection in a re-evaluation/pre-emption process. For example, terminals continuously perform sensing within a configured resource pool to search for available resources, which leads to high power consumption by the terminals, posing a challenge for power-limited (power-limited) terminals unable to meet the energy consumption requirements. Therefore, the prior art suffers from the issue of high power consumption in the re-evaluation/pre-emption process.

### SUMMARY

Embodiments of this application provide a transmission processing method and apparatus, a terminal, and a storage medium, so as to solve the issue of high power consumption in a re-evaluation or pre-emption process.

According to a first aspect, a transmission processing method is provided, including:
determining, by a terminal, first resource information for first data, the first resource information being used to re-evaluate or preempt a target resource; where
the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part (Bandwidth Part, BWP); a power saving mode of the terminal; a power level of the terminal; a discontinuous reception (Discontinuous Reception, DRX) configuration of the terminal; third resource information configured or indicated in the resource pool; or information related to second data, the second data being different from the first data.

According to a second aspect, a transmission processing apparatus is provided, including:
a first determining module configured to determine first resource information for first data, the first resource information being used to re-evaluate or preempt a target resource; where
the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part BWP; a power saving mode of a terminal; a power level of the terminal; a discontinuous reception DRX configuration of the terminal; third resource information configured or indicated in the resource pool; or information related to second data, the second data being different from the first data.

According to a third aspect, a terminal is provided, where the terminal includes a processor, a memory, and a program or instructions stored in the memory and capable of running on the processor, and when the program or instructions are executed by the processor, the steps of the method according to the first aspect are implemented.

According to a fourth aspect, a terminal is provided, including a processor and a communications interface, where
the processor is configured to determine first resource information for first data, the first resource information being used to re-evaluate or preempt a target resource; where
the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part BWP; a power saving mode of the terminal; a power level of the terminal; a discontinuous reception DRX configuration of the terminal; third resource information configured or indicated in the resource pool; or information related to second data, the second data being different from the first data.

According to a fifth aspect, a readable storage medium is provided, where the readable storage medium stores a program or instructions, and when the program or instructions are executed by a processor, the steps of the method according to the first aspect are implemented.

According to a sixth aspect, an embodiment of this application provides a chip, where the chip includes a processor and a communications interface, the communications interface is coupled to the processor, and the processor is configured to run a program or instructions so as to implement the steps of the method according to the first aspect.

According to a seventh aspect, a computer program/program product is provided, where the computer program/program product is stored in a non-transitory storage medium, and the computer program/program product is executed by at least one processor to implement the method according to the first aspect.

According to an eighth aspect, a communications device is provided and configured to perform the method according to the first aspect.

In the embodiments of this application, a terminal is configured to determine first resource information for first data, the first resource information being used to re-evaluate or preempt a target resource, where the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part BWP; a power saving mode of the terminal; a power level of the terminal; a discontinuous reception DRX configuration of the terminal; third resource information configured or indicated in the resource pool; or information related to second data, the second data being different from the first data. Since the association between the first target information and the first resource information has been defined, the target resource can be re-evaluated or preempted based on the determined first resource information. This eliminates the need for using full sensing in the re-evaluation or pre-emption process, thereby reducing the collision rate of target resources and reducing the power consumption of the terminal.

### BRIEF DESCRIPTION OF DRAWINGS

FIG. 1 is a structural diagram of a network system to which an embodiment of this application is applicable;
FIG. 2 is an example illustration of partial sensing performed by a terminal;
FIG. 3 is a flowchart of a transmission processing method according to an embodiment of this application;
FIG. 4 is a first example illustration of sensing performed by a terminal in a transmission processing method according to an embodiment of this application;
FIG. 5 is a second example illustration of sensing performed by a terminal in a transmission processing method according to an embodiment of this application;
FIG. 6 is a third example illustration of sensing performed by a terminal in a transmission processing method according to an embodiment of this application;
FIG. 7 is a structural diagram of a transmission processing apparatus according to an embodiment of this application;
FIG. 8 is a structural diagram of a communications device according to an embodiment of this application; and
FIG. 9 is a structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type and do not limit the quantity of objects. For example, there may be one or a plurality of first objects. In addition, "and/or" in the specification and claims represents at least one of connected objects, and the character "/" generally indicates an "or" relationship between the associated objects.

It is worth noting that the technology described in the embodiments of this application is not limited to long term evolution (Long Term Evolution, LTE)/LTE-Advanced (LTE-Advanced, LTE-A) systems, but may also be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, such as a sixth generation (6th Generation, 6G) communications system.

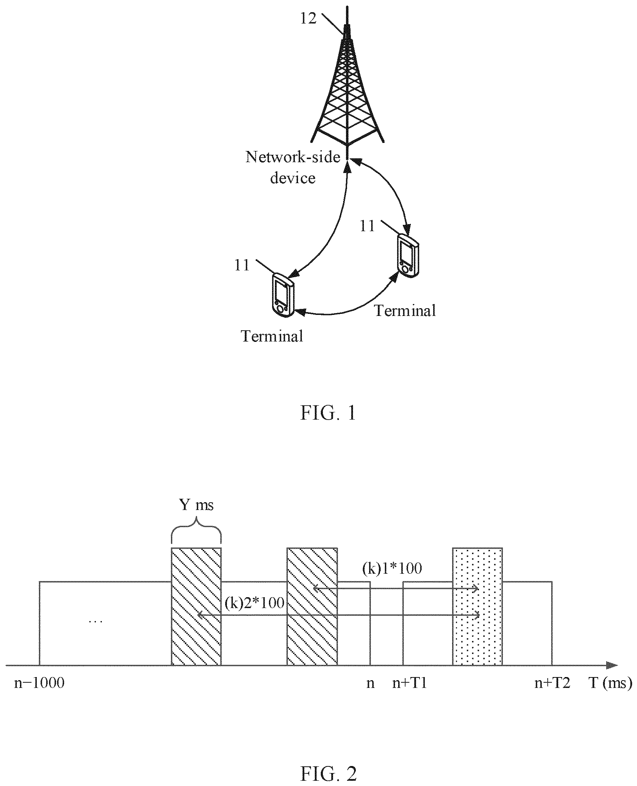

FIG. 1 is a block diagram of a wireless communications system to which an embodiment of this application is applicable. The wireless communications system includes a terminal 11 and a network-side device 12. The terminal 11 may be a terminal-side device such as a mobile phone, a tablet personal computer (Tablet Personal Computer), a laptop computer (Laptop Computer) also referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), or smart home (home appliances or furniture with wireless communications functions, such as refrigerators, televisions, washing machines, or furniture). The wearable device includes a smart watch, a smart band, a smart headset, smart glasses, smart jewelry (smart bangle, smart bracelet, smart ring, smart necklace, smart anklet, smart ankle bracelet, and the like), a smart wristband, smart clothing, a gaming console, and the like. It should be noted that a specific type of the terminal 11 is not limited in this embodiment of this application. The network-side device 12 may be a base station or a core network device, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (wireless local area network, WLAN) access point, a wireless fidelity (Wireless Fidelity, WiFi) node, a transmitting receiving point (Transmitting Receiving Point, TRP), or another appropriate term in the art. As long as the same technical effects are achieved, the base station is not limited to a specific technical term. It should be noted that the base station in the NR system is merely used as an example in the embodiments of this application, but a specific type of the base station is not limited.

For ease of understanding, the following describes some content included in the embodiments of this application:

### 1. Resource allocation for sidelink transmission

Two allocation modes (mode) are defined in sidelink. One of which is mode 1 in which resources are scheduled for a base station, and the other of which is mode 2 in which the terminal decides what resources to use for transmission. In this case, resource information may come from a broadcast message of the base station or pre-configured information. A terminal operating within the coverage of the base station and having a radio resource control (Radio Resource Control, RRC) connection to the base station can operate in mode 1 and/or mode 2. A terminal operating within the coverage of the base station but having no radio resource control with the base station can operate only in mode 2. A terminal outside the coverage of the base station can operate only in mode 2 and performs SL transmission according to the pre-configured information.

The specific operating manner for mode 2 is as follows:
(1) After a resource selection process is triggered, a transmit terminal (Transmit User Equipment, TX UE) first determines a resource selection window. A lower boundary of the resource selection window is at time T1 after the resource selection process is triggered, and an upper boundary of the resource selection window is at time T2 after the resource selection is triggered, where T2 is a value selected by the UE within a packet delay budget (packet delay budget, PDB) of transport block (Transport Block, TB) transmission thereof during implementation, and T2 is not earlier than T1.
(2) Before resource selection, the UE needs to determine a candidate resource set (candidate resource set) for resource selection, and compare reference signal received powers (Reference Signal Receiving Power, RSRP) measured on resources in a resource selection window with a corresponding reference signal received power threshold (Reference Signal Received Power threshold, RSRP threshold). If the RSRP is lower than the RSRP threshold, the resource can be included in the candidate resource set.
(3) After the resource set is determined, the terminal randomly selects a transmission resource from the candidate resource set. In addition, during a current transmission, the terminal may reserve a transmission resource for subsequent transmission.

Generally, the terminal performs sensing within the frequency domain bandwidth of the entire resource pool allocated in each slot. According to the defined sensing capability, the number of sensing attempts is not greater than the sensing capability of the terminal.

### 2. Partial sensing (Partial sensing) in LTE vehicle-to-everything (Vehicle-to-Everything, V2X)

The partial sensing (Partial sensing) in LTE V2X is mainly designed to save power. Partial sensing in time domain has been defined. The terminal supports two modes of resource selection. One mode is random resource selection, and the other mode is to perform partial sensing first, select resources based on a result of partial sensing, and perform semi-static resource reservation. Which mode to be selected by the terminal is determined by RRC configuration. When the RRC configuration supports the both modes of resource selection, the terminal implementation decides which resource selection mode to use.

Optionally, a manner in which the terminal performs partial sensing and resource sensing is as shown in FIG. 2, where terminal sensing windows are windows with slash shadow in a range of [n-1000, n], length Y and k are RRC configured parameters, and a value range of k may be {1, 2, 3, ..., 10}. A window with dotted shadow in [n+T1, n+T2] in a selection window is a selection window for the terminal configured by a higher layer. The UE monitors for sidelink control information (Sidelink Control Information, SCI) sent by other terminals in the sensing windows with slash shadow, and according to detected SCI and a reservation period, infers resource reservation of other terminals in the window with dotted shadow. The UE may exclude resources that do not satisfy the conditions in the selection window according to such information. At least 20% of the remaining resources (20% of the window length Y) are selected as the candidate resource set and reported to the medium access control (MAC) layer. The MAC layer randomly selects a resource from the candidate resource set as a candidate resource for the terminal. The terminal performs periodic reservation for the selected resource, and the reserved period is indicated in the SCI.

### 3. SL sensing mechanism

In this application, the sensing mechanism may also be referred to as a resource selection mechanism. In SL, up to three sensing mechanisms can be configured within a resource pool: full sensing mechanism, partial sensing mechanism, and random selection (random selection) mechanism. The sensing power overheads of the sensing mechanisms in terms of power consumption satisfy the following: full sensing ≥ partial sensing ≥ random selection. The resource sensing reliability of the sensing mechanisms satisfies the following: full sensing ≥ partial sensing ≥ random selection.

In NR SL, there are the following two sensing mechanisms in the partial sensing mechanism: periodic based partial sensing (periodic based partial sensing, PBPS) and continuous partial sensing (continuous partial sensing, CPS), where the PBPS is used to determine a location for a sensing window based on a resource selection window and a period value, and the CPS is used to sense an aperiodic traffic present in the resource pool within a continuous time window before the selection window.

### 4. SL re-evaluation/pre-emption mechanism

In resource allocation mode 2, a resource selection (selection) re-evaluation (re-evaluation) mechanism is supported. A brief description of the mechanism is as follows: In order for the terminal to determine whether resources (for example, which may be a physical sidelink control channel (Physical Sidelink Control Channel, PSCCH) and/or a physical sidelink shared channel (Physical Sidelink Shared Channel, PSSCH)) that have been selected but not yet reserved are in an idle/low interference state, the terminal performs re-evaluation for resource selection at least at time "m-T3", where the time "m" is a time at which reservation information of the resources is initially transmitted, and T3 at least includes a duration for resource selection processing by the terminal. The UE performs the steps of resource selection again at least at "m-T3" to obtain a candidate resource set. In a case that the resources selected by the terminal are still in the candidate resource set, the UE does not need to perform resource re-selection (re-selection); otherwise, the UE selects new transmission resources from the candidate resource set.

The resource pre-emption (pre-emption) mechanism is supported. The mechanism is briefly described as follows: When a reserved/selected resource of a terminal overlaps (partially overlaps) a reserved/selected resource of another terminal with a higher-priority service, and a sidelink reference signal received power (Sidelink Reference Signal Received Power, SL-RSRP) measurement value of the terminal on related resources is greater than an associated SL-RSRP threshold, the terminal triggers resource re-selection. The service priority and the SL-RSRP threshold are determined by the TB transmission on the resources. In order to determine whether a reserved/selected resource is preempted, the terminal performs re-evaluation for resource selection at least at time "m-T3", where the time "m" represents a time at which the resource selected is located, and T3 at least includes a duration for resource selection processing by the terminal.

In NR V2X, when the terminal performs re-evaluation/pre-emption, only a sensing result by the terminal at time m-T3 is required. Sensing in the remaining slots depends on UE implementation. Because the terminal adopts the full sensing resource selection mechanism, it is assumed that the UE will also perform resource sensing in remaining sensing slots, and resource selection can be performed based on the sensing results.

Considering the power saving requirement of the UE, if the implementation is based on the UE, the UE may not necessarily perform sensing at locations other than m-T3. If no sensing is performed, the probability of resource collision in the resource pool may increase. To balance the trade-off between the sensing energy overhead and the probability of resource collision, it is necessary to consider the number of to-be-sensed resources in the re-evaluation/pre-emption mechanism.

The following describes in detail a transmission processing method provided in an embodiment of this application by using some embodiments and application scenarios thereof with reference to the accompanying drawings.

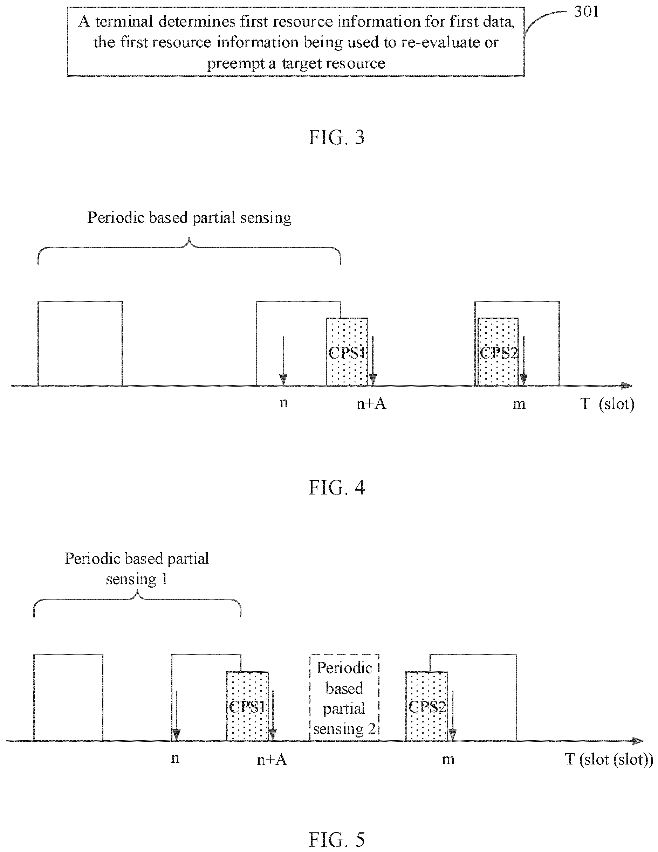

Referring to FIG. 3, FIG. 3 is a flowchart of a transmission processing method according to an embodiment of this application. As shown in FIG. 3, the method includes the following step.

Step 301. A terminal determines first resource information for first data, the first resource information being used to re-evaluate or preempt a target resource; where
the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part; a power saving mode of the terminal; a power level of the terminal; a discontinuous reception DRX configuration of the terminal; third resource information configured or indicated in the resource pool; or information related to second data, the second data being different from the first data.

In this embodiment of this application, the target resource can be understood as either an initially selected resource or a resource selected based on re-evaluation or pre-emption. The terminal can re-evaluate or preempt the target resource based on the first resource information to reduce the probability of target resource collision, thereby improving transmission reliability. In other words, before the step 301, the method may also include: determining, by the terminal, a target resource.

It should be understood that re-evaluating the target resource can be considered equivalent to preempting the target resource. In this embodiment of this application, the first data and the second data can be understood as follows: data packets, SL processes (process), hybrid automatic repeat request (Hybrid Automatic Repeat Request, HARQ) processes, resource sets, TBs, MAC protocol data units (Protocol Data Unit, PDU), or the like. In other words, the first data can be replaced with first data packet, first SL process, first HARQ process, first resource set, first TB, first MAC protocol data unit (Protocol Data Unit, PDU), or the like. The second data can be replaced with second data packet, second SL process, second HARQ process, second resource set, second TB, second MAC PDU, or the like. For example, in a case that the first data is a first SL process and that the second data is a second SL process, the difference between the first data and the second data can be understood as that the first data and the second data are different SL processes.

Optionally, whether the first data is periodic traffic can be replaced by whether the first data enables periodic reservation, or whether the indicated period is 0. When the first data enables periodic reservation or the indicated period is a non-zero value, it can be understood that the first data is periodic traffic. When the first data does not enable periodic reservation or the indicated period is 0, it can be understood that the first data is an aperiodic traffic.

In a case that the first resource information is associated with whether periodic reservation is enabled in the resource pool, it can be understood that the first resource information is related to whether periodic data exists in the resource pool.

In a case that the first resource information is associated with the periodicity of the resource pool configuration, it can be understood that the first resource information is related to whether a period configuration corresponding to the resource pool contains one or more first objects, the first object being of a non-zero period or a preset non-zero period.

In a case that the first resource information is associated with the measurement result of the resource pool or the bandwidth part BWP, it can be understood that the first resource information is related to at least one of a priority of the first data, a delay of the first data, a packet delay budget PDB of the first data, a quality of service (Quality of Service, QoS) parameter of the first data, a channel busy rate (Channel Busy Rate, CBR), a channel occupancy ratio (Channel occupancy Ratio, CR), a reference signal received power (Reference Signal Received Power, RSRP), a reference signal received quality RSRQ, a reference signal strength indication (Received Signal Strength Indication, RSSI), a power saving mode of the terminal, a power level of the terminal, a DRX configuration, and a hybrid automatic repeat request acknowledgement.

In the embodiments of this application, a terminal is configured to determine first resource information for first data, the first resource information being used to re-evaluate or preempt a target resource, where the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part BWP; a power saving mode of the terminal; a power level of the terminal; a discontinuous reception DRX configuration of the terminal; third resource information configured or indicated in the resource pool; or information related to second data, the second data being different from the first data. Since the association between the first target information and the first resource information has been defined, the target resource can be re-evaluated or preempted based on the determined first resource information. This eliminates the need for using full sensing in the re-evaluation or pre-emption process, thereby reducing the collision rate of target resources and reducing the power consumption of the terminal.

Optionally, in some embodiments, the first resource information includes at least one of the following resource information: a resource selection method, a resource sensing method, to-be-sensed resources, a resource size, a minimum number of resource sizes, a maximum number of resource sizes, a resource location, a resource sensing trigger time, and a resource selection trigger time.

In this embodiment of this application, the resource size can be understood as a to-be-sensed resource size, the minimum number of resource sizes can be understood as to-be-sensed resource size data, and the maximum number of resource sizes can be understood as a maximum number of sizes of to-be-sensed resources. In addition, the resource size can be understood as a size of to-be-selected resources, the minimum number of resource sizes can be understood as to-be-selected resource size data, and the maximum number of resource sizes can be understood as a maximum number of sizes of to-be-selected resources.

It should be noted that, in this embodiment of this application, determining the first resource information can be understood as performing resource selection or resource sensing.

Optionally, in some embodiments, in a case that the first resource information is associated with whether periodic reservation is enabled in the resource pool, the first resource information satisfies at least one of the following:
in a case that periodic reservation is enabled in the resource pool, the first resource information is determined based on first sensing or based on the first sensing and second sensing; and
in a case that periodic reservation is not enabled in the resource pool, the first resource information is determined based on the second sensing or based on the first sensing and the second sensing.

In the embodiments of this application, a sensing duration of the first sensing is greater than a sensing duration of the second sensing. In the embodiments of this application, the first sensing can be understood as periodic sensing, for example, as PBPS, and the second sensing can be understood as aperiodic sensing, for example, as CPS.

For example, in some embodiments, it may be assumed that the first resource information is related to whether the period configuration in the resource pool is 0.

In a case that the period is enabled, the resource pool contains a non-zero period configuration, or the period configuration corresponding to the resource pool contains one or more first objects, the first resource information may be determined based on PBPS (which may also be referred to as resource selection based on PBPS), or the first resource information may be determined based on PBPS and CPS (which may also be referred to as resource selection based on PBPS and CPS).

In a case that the period is not enabled, the resource pool contains only periodic reservations with the period configuration of 0, or the period configuration corresponding to the resource pool contains no first object, the first resource information is determined based on CPS (which may also be referred to as resource selection based on CPS).

The first object is of a non-zero period or a preset non-zero period. The preset non-zero period can be understood as a preset value of a configured period value. The preset value is greater than 0. For example, a period corresponding to some period values that are not 0 can be used as a preset non-zero period. A period value of the preset non-zero period may be determined through protocol agreement, preconfiguration, configuration, or indication.

Optionally, in some embodiments, in a case that the first resource information is associated with the second resource information, the first resource information satisfies at least one of the following:
a first target sensing mode used to determine the first resource information is the same as a second target sensing mode, where the second target sensing mode is used to determine the second resource information, and the second target sensing mode includes at least one of first sensing and second sensing;
a third target sensing mode usable for determining the first resource information includes the second target sensing mode;
in a case that the second resource information is determined based on third sensing, the first resource information is determined based on at least one of the first sensing and the second sensing; and
in a case that the second resource information includes randomly selected resources, the first resource information is determined based on at least one of the first sensing, the second sensing, and m-T33; where
a duration of the third sensing is longer than a sensing duration of the first sensing and a sensing duration of the second sensing, m represents a time unit of resources selected or re-selected for the first data, and T33 is a preset duration.

In this embodiment of this application, the first target sensing mode and the second target sensing mode can be understood as sensing used at different times or for different resources or resource sets. The first target sensing mode can be understood to determine that the sensing used for the first resource information, for example, may include at least one of the first sensing and the second sensing, and of course, may also include other sensing. Similarly, the second target sensing mode may be understood to determine that the sensing used for the second resource information, for example, may include at least one of the first sensing and the second sensing, and of course, may also include other sensing. This is described in detail below with reference to specific embodiments.

It is assumed that second resource information for selection or reselection for first data is determined using CPS (or PBPS), first resource information for re-evaluation or pre-emption for the first data is determined using CPS (or PBPS).

It is assumed that second resource information for selection or reselection for first data is determined using CPS and PBPS, first resource information for re-evaluation or pre-emption for the first data is determined using CPS and PBPS.

In a case that the first resource information satisfies a condition that a third target sensing mode usable for determining the first resource information includes the second target sensing mode, the second target sensing mode can be used to determine the first resource information, or at least the second target sensing mode is used to determine the first resource information.

For example, if PBPS and CPS are used in re-selection or selection for the first data to determine the second resource information, then re-evaluation or pre-emption for the first data is based on the first resource information determined using PBPS and/or CPS. A specific sensing mode used may depend on a terminal implementation.

Optionally, the third sensing can be understood as full sensing (full sensing). In some embodiments, the foregoing T33 is longer than a processing time of resource selection.

Optionally, the first resource information satisfies at least one of the following:
in a case that a power level of the terminal is greater than a power level corresponding to a first target object and less than or equal to a power level corresponding to a second target object, the first resource information is determined based on the m-T33;
in a case that the power level of the terminal is greater than the power level corresponding to the second target object and less than or equal to a power level corresponding to a third target object, the first resource information is determined based on the second sensing; and
in a case that the power level of the terminal is greater than the power level corresponding to the third target object, the first resource information is determined based on the second sensing or based on the second sensing and the first sensing; where
the power level corresponding to the third target object is greater than the power level corresponding to the second target object, the power level corresponding to the second target object is greater than the power level corresponding to the first target object, and the first target object, the second target object, and the third target object have different power levels or power saving modes.

Optionally, in the embodiments of this application, when the target object is a power level, the first target object can be understood as a first power level or power level 1, the second target object can be understood as a second power level or power level 2, and the above third target object can be understood as a third power level or power level 3. It should be understood that the power saving mode and power level are both parameters agreed by protocol, configured by a network-side device, pre-configured by the network-side device, indicated by the network-side device, configured by a terminal-side device, pre-configured by the terminal-side device, or indicated by the terminal-side device.

Optionally, in a case that the first resource information is associated with the DRX configuration of the terminal, the first resource information satisfies at least one of the following:
in a case that a third preset condition is satisfied, the first resource information is determined based on second sensing; and
in a case that a third preset condition is not met, the first resource information is determined based on first sensing and second sensing; where
the third preset condition includes at least one of the following: the DRX is not enabled; a length of a DRX on duration (on duration) is greater than a first preset duration; a length of a DRX off duration (off duration) is less than a second preset duration; a proportion of the DRX on duration is greater than a first preset proportion; and a proportion of the DRX off duration is less than a second preset proportion.

In the embodiments of this application, if DRX is not enabled, the DRX on duration is greater than the first preset duration, the DRX off duration is less than the second preset duration, the proportion of the DRX on duration is greater than the first preset proportion; or the proportion of the DRX off duration is less than the second preset proportion, the first resource information is determined based on CPS. If DRX is enabled, the DRX on duration is less than or equal to the first preset duration, the DRX off duration is greater than or equal to the second preset duration, the proportion of the DRX on duration is less than or equal to the first preset proportion; or the proportion of the DRX off duration is greater than or equal to the second preset proportion, the first resource information is determined based on PBPS and CPS.

Optionally, the information related to the second data includes at least one of the following:
whether being periodic traffic;
whether periodic reservation is enabled;
resource information for selection or reselection; and
resource information for re-evaluation or pre-emption.

Optionally, in a case that the first resource information is associated with the resource information for selection or reselection for the second data, the first resource information satisfies any one of the following:
the first resource information is the same as the resource information for selection or reselection for the second data; and
the first resource information uses at least some sensing results corresponding to the resource information for selection or reselection for the second data.

In the embodiments of this application, selection of the at least some sensing results can depend on a terminal implementation. For example, if the second data uses PBPS and CPS, re-evaluation/pre-emption for the first data may use a PBPS result of the second data.

Optionally, in a case that the first resource information is associated with the resource information for re-evaluation or pre-emption for the second data, the first resource information satisfies:
the first resource information is the same as the resource information for re-evaluation or pre-emption for the second data.

Optionally, in some embodiments, the first resource information satisfies at least one of the following:
in a case that a priority of the first data is higher than or equal to a priority of the second data, resource exclusion is performed based on sensing results of the second data; and
in a case that the priority of the first data is lower than or equal to the priority of the second data, resource sensing is performed based on sensing results of the second data.

In the embodiments of this application, resource exclusion being performed based on sensing results of the second data can be understood as exclusion of resources excluded in the sensing of the second data. In other words, if the terminal senses, based on the second data, resources that would be excluded, then parameters for sensing based on the first data will also be excluded. Alternatively, it can be considered that if the terminal senses, based on the second data, resources that would be excluded, the excluded resources corresponding to the second data can be directly excluded in selecting resources for the first data.

Resource sensing being performed based on sensing results of the second data can be understood as additional resources being excluded in resources selection by the terminal for the first data, resulting in fewer available resources.

It should be understood that the priority of the first data being higher than or equal to the priority of the second data can be understood as the priority value of the first data ≤ the priority value of the second data.

Optionally, in a case that a second preset condition is met, the first resource information is associated with the information related to the second data, where
the second preset condition includes at least one of the following:
a priority difference or an absolute value of the priority difference between the first data and the second data is less than a first threshold;
a delay budget difference or an absolute value of the delay budget difference between the first data and the second data is less than a second threshold;
a time interval between trigger resources of the first data and the second data is less than a third threshold;
a period difference or an absolute value of the period difference between the first data and the second data is less than a fourth threshold;
a number of resource overlaps between the first data and the second data is greater than a fifth threshold;
a resource overlap ratio between the first data and the second data is greater than a sixth threshold; and
a sensing window corresponding to the second data is located before resources selected or re-selected for the first data.

In the embodiments of this application, values of the first threshold, the second threshold, the third threshold, the fourth threshold, the fifth threshold, and the sixth threshold may be agreed by protocol, pre-configured, configured, or indicated by the network-side device, or pre-configured, configured, or indicated by the terminal-side device.

Optionally, in a case that the first resource information is associated with whether the first data is periodic traffic or whether the first data enables periodic reservation, the first resource information satisfies at least one of the following:
in a case that the first data is periodic traffic or that the first data enables periodic reservation, the first resource information is determined based on first sensing or based on the first sensing and second sensing; and
in a case that the first data is aperiodic traffic or that the first data does not enable periodic reservation, the first resource information is determined based on the second sensing or based on the first sensing and the second sensing.

In the embodiments of this application, the first data being periodic traffic can also be understood as a periodic grant (grant) indicating a resource for the first data; in this case, a packet arrival time of the first data can be predicted in advance; and the first data being aperiodic traffic can also be understood as an aperiodic grant indicating a resource for the first data; in this case, a packet arrival time cannot be predicted much in advance, and whether first sensing is required can be determined based on the packet arrival time.

For example, in some embodiments, if the periodic grant indicates a resource for the first data, the first resource information may be determined based on PBPS, or the first resource information may be determined based on PBPS and CPS; and if the aperiodic grant indicates a resource for the first data, the first resource information may be determined based on CPS, or the first resource information may be determined based on PBPS and CPS.

Optionally, in some embodiments, determining, by the terminal, the first resource information for re-evaluation or pre-emption for the first data includes:
determining, by the terminal, the first resource information for re-evaluation or pre-emption for the first data, based on second target information agreed by protocol, pre-configured by a network-side device, configured by the network-side device, indicated by the network-side device, configured by a terminal-side device, pre-configured by the terminal-side device, or indicated by the terminal-side device.

Optionally, the first resource information may be resource information agreed by protocol, pre-configured by the network-side device, configured by the network-side device, indicated by the network-side device, configured by a terminal-side device, pre-configured by the terminal-side device, or indicated by the terminal-side device, for example, the second target information PBPS, CPS, or PBPS and CPS.

Optionally, in some embodiments, the second target information may include at least one of the following: a priority of the first data, a delay of the first data, a data delay budget PDB of the first data, a QoS parameter of the first data, a channel busy rate CBR, a channel occupancy ratio CR, a reference signal received power RSRP, a reference signal received quality (Reference Signal Received Quality, RSRQ), a reference signal strength indication (Received Signal Strength Indication, RSSI), a power saving mode of the terminal, a power level of the terminal, a DRX configuration, and a hybrid automatic repeat request acknowledgement (Hybrid Automatic Repeat reQuest acknowledgement, HARQ-ACK).

Optionally, in some embodiments, before determining, by the terminal, the first resource information for re-evaluation or pre-emption for the first data, the method further includes:
determining a priority of the first data; where
in a case that the priority of the first data is higher than a seventh threshold, determining the first resource information for re-evaluation or pre-emption for the first data; and in a case that the priority of the first data is lower than or equal to the seventh threshold, skipping the operation of determining the first resource information for re-evaluation or pre-emption for the first data.

Skipping the operation of determining the first resource information for re-evaluation or pre-emption for the first data can be understood as skipping performing PBPS and CPS sensing, or that a sensing window size corresponding to PBPS is 0, and that a sensing window size corresponding to CPS is 0.

Optionally, in a case that the first resource information is determined based on first sensing, a first target window of the first sensing satisfies at least one of the following:
first window information of the first target window is agreed by protocol, configured by a network-side device, pre-configured by the network-side device, indicated by the network-side device, configured by a terminal-side device, pre-configured by the terminal-side device, or indicated by the terminal-side device, the first window information including a smallest length of the first sensing or at least one of a size, length, location, starting location and ending location of the first sensing;
the first target window is a sensing window corresponding to resource selection or re-selection;
the first target window is a sensing window located before m and satisfying a first sensing condition;
the first target window is a sensing window located before m-T11 and satisfying the first sensing condition;
the first target window is a sensing window located between n and m and satisfying the first sensing condition;
the first target window is a sensing window located between n and m-T11 and satisfying the first sensing condition; and
the first target window is a sensing window located between n+T22 and m-T11 and satisfying the first sensing condition; where
m represents a time unit of resources selected or re-selected for the first data, n represents a time unit of arrival of the first data or a time unit of resources selected or re-selected for the first data, T11 represents a third preset duration, and T22 represents a fourth preset duration.

It should be understood that the first target window and the second target window may overlap or not, which is not further limited herein.

In the embodiments of this application, the first target window may be part or all of the sensing window corresponding to the first sensing. In other words, resource selection may be performed based on sensing results of part or all of the sensing window corresponding to the first sensing.

In a case that the first target window is a sensing window corresponding to resource selection or re-selection, no sensing results of new first sensing are added in relation to resource selection.

In a case that the first target window is a sensing window located before m and satisfying a first sensing condition, if there exists a sensing window corresponding to the first sensing between slots [n, m-T33], there may be additional sensing results of the first sensing.

In a case that the first target window is a sensing window located between n+T22 and m-T11 and satisfying the first sensing condition, there may not exist a complete sensing window of length Y between [n, m-T33]. Instead, there could be a sensing window smaller than Y

Optionally, a size of the time unit can be set according to actual requirements. For example, in some embodiments, the time unit may be slot. T11 and T22 may be same duration or different durations.

Optionally, in a case that the first resource information is determined based on second sensing, a second target window of the second sensing satisfies at least one of the following:
second window information of the second target window is agreed by protocol, configured by a network-side device, pre-configured by the network-side device, indicated by the network-side device, configured by a terminal-side device, pre-configured by the terminal-side device, or indicated by the terminal-side device, the second window information including a smallest length of the second sensing or at least one of a size, length, location, starting location and ending location of the second sensing;
the second target window is a sensing window located before m-T11;
the second target window is a sensing window located after n+A; and
the second target window is between n+TA and n+TB; where
m represents a time unit of resources selected or re-selected for the first data, n represents a time unit of arrival of the first data or a time unit of resources selected or re-selected for the first data, T11 represents a third preset duration, A represents a fifth preset duration, TA represents a sixth preset duration, and TB represents a seventh preset duration.

In the embodiments of this application, the second target window may be part or all of the sensing window corresponding to the second sensing. In other words, resource selection may be performed based on sensing results of part or all of the sensing window corresponding to the second sensing.

Optionally, n+A represents a moment when target resources are selected or re-selected. In a case that the second target window is a sensing window located after n+A, it can be understood that sensing results before n+A should be included in the moment of selection or re-selection, so there is no need to use overlapped (overlap) sensing results.

Optionally, determining, by the terminal, the first resource information for re-evaluation or pre-emption for the first data includes:
in a case that the terminal determines, based on first sensing, the first resource information for re-evaluation or pre-emption for the first data, the terminal performs resource exclusion based on a period indication in side link control information SCI detected within a sensing window of the first sensing;
in a case that the terminal determines, based on first sensing, the first resource information for re-evaluation or pre-emption for the first data, the terminal performs resource exclusion based on a period indication and a time-frequency resource indication in SCI detected within a sensing window of the first sensing;
in a case that the terminal determines, based on second sensing, the first resource information for re-evaluation or pre-emption for the first data, the terminal performs resource exclusion based on a time-frequency resource indication in SCI detected within a sensing window of the second sensing; and
in a case that the terminal determines, based on second sensing, the first resource information for re-evaluation or pre-emption for the first data, the terminal performs resource exclusion based on a time-frequency resource indication and a period indication in SCI detected within a sensing window of the second sensing.

For better understanding of this application, the implementation of this application is described in detail below using some specific examples.

### Example 1: Sensing results for resource selection can be used for re-evaluation/pre-emption.

As shown in FIG. 4, it is assumed that data packets to be sent by the terminal is periodic traffic, and a resource of slot m is selected in slot n+A (m > n). The UE performs resource selection based on PBPS and CPS 1 in slot n+A.

The terminal performs re-evaluation/pre-emption selection at time m-T33 based on some/all PBPS sensing results before n+A and CPS 2 sensing results within [m-TA, m-T33], and determines to-be-selected resources at m-T33.

### Example 2: In re-evaluation/pre-emption, a sensing method same as that in resource selection can be used, but the resource selection is based on additional sensing results after initial selection to determine a result of re-evaluation/pre-emption.

As shown in FIG. 5, the terminal selects the resource of slot m in slot n (m > n). The terminal performs resource selection based on PBPS 1 and CPS 1 in slot n+A.

The terminal performs resource selection at time m-T33, determines a location for PBPS 2 and a sensing location for CPS 2 based on slot m between [n+A+T11, m-T33], performs re-evaluation/pre-emption selection based on the results after n+A, and determines to-be-selected resources at m-T33.

### Example 3

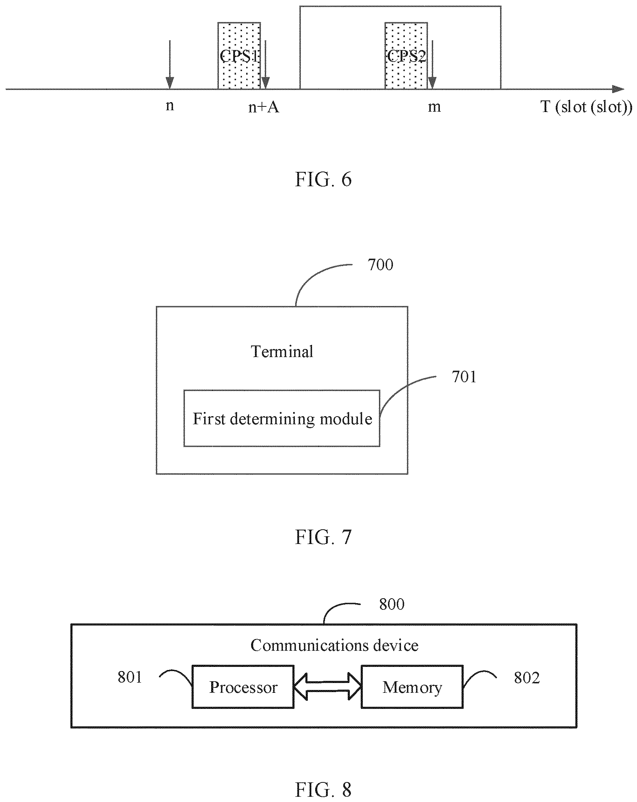

As shown in FIG. 6, it is assumed that data packets to be sent by the terminal are aperiodic traffic, and a resource of slot m is selected in slot n+A (m > n). The terminal performs resource selection based on CPS 1 in slot n+A.

The terminal performs re-evaluation/pre-emption selection at time m-T33 based on CPS 2 sensing results, and determines to-be-selected resources at m-T33.

It should be noted that in the embodiments of this application, T11 may be a same parameter as T1, or may be a different parameter from T1; and T33 may be a same parameter as T3, or may be a different parameter from T3.

It should be understood that in FIG. 4 to FIG. 6, n represents a time when a data packet arrives, n+A represents a time for resource selection, and m represents a selected resource or a time corresponding to the selected resource.

It should be noted that the transmission processing method provided in the embodiments of this application may be performed by a transmission processing apparatus or a control module for performing the transmission processing method in the transmission processing apparatus. In the embodiments of this application, the transmission processing apparatus provided in the embodiments of this application is described by using an example in which the transmission processing apparatus performs the transmission processing method.

Referring to FIG. 7, FIG. 7 is a structural diagram of a transmission processing apparatus according to an embodiment of this application. As shown in FIG. 7, the transmission processing apparatus 700 includes:
a first determining module 701 configured to determine first resource information for first data, the first resource information being used to re-evaluate or preempt a target resource; where
the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part BWP; a power saving mode of a terminal; a power level of the terminal; a discontinuous reception DRX configuration of the terminal; third resource information configured or indicated in the resource pool; or information related to second data, the second data being different from the first data.

Optionally, in some embodiments, the transmission processing apparatus 700 further includes a second determining module configured to determine a target resource.

Optionally, the first resource information includes at least one of the following resource information: a resource selection method, a resource sensing method, to-be-sensed resources, a resource size, a minimum number of resource sizes, a maximum number of resource sizes, a resource location, a resource sensing trigger time, and a resource selection trigger time.

Optionally, in a case that the first resource information is associated with whether periodic reservation is enabled in the resource pool, the first resource information satisfies at least one of the following:
in a case that periodic reservation is enabled in the resource pool, the first resource information is determined based on first sensing or based on the first sensing and second sensing; and
in a case that periodic reservation is not enabled in the resource pool, the first resource information is determined based on the second sensing or based on the first sensing and the second sensing.

Optionally, in a case that the first resource information is associated with the second resource information, the first resource information satisfies at least one of the following:
a first target sensing mode used to determine the first resource information is the same as a second target sensing mode, where the second target sensing mode is used to determine the second resource information, and the second target sensing mode includes at least one of first sensing and second sensing;
a third target sensing mode usable for determining the first resource information includes the second target sensing mode;
in a case that the second resource information is determined based on third sensing, the first resource information is determined based on at least one of the first sensing and the second sensing; and
in a case that the second resource information includes randomly selected resources, the first resource information is determined based on at least one of the first sensing, the second sensing, and m-T33; where
a duration of the third sensing is longer than a sensing duration of the first sensing and a sensing duration of the second sensing, m represents a time unit of resources selected or re-selected for the first data, and T33 is a preset duration.

Optionally, the first resource information satisfies at least one of the following:
in a case that a power level of the terminal is greater than a power level corresponding to a first target object and less than or equal to a power level corresponding to a second target object, the first resource information is determined based on the m-T33;
in a case that the power level of the terminal is greater than the power level corresponding to the second target object and less than or equal to a power level corresponding to a third target object, the first resource information is determined based on the second sensing; and
in a case that the power level of the terminal is greater than the power level corresponding to the third target object, the first resource information is determined based on the second sensing or based on the second sensing and the first sensing; where
the power level corresponding to the third target object is greater than the power level corresponding to the second target object, the power level corresponding to the second target object is greater than the power level corresponding to the first target object, and the first target object, the second target object, and the third target object have different power levels or power saving modes.

Optionally, in a case that the first resource information is associated with the DRX configuration of the terminal, the first resource information satisfies at least one of the following:
in a case that a third preset condition is satisfied, the first resource information is determined based on second sensing; and
in a case that a third preset condition is not met, the first resource information is determined based on first sensing and second sensing; where
the third preset condition includes at least one of the following: the DRX is not enabled; a length of a DRX on duration is greater than a first preset duration; a length of a DRX off duration is less than a second preset duration; a proportion of the DRX on duration is greater than a first preset proportion; and a proportion of the DRX off duration is less than a second preset proportion.

Optionally, the information related to the second data includes at least one of the following:
whether being periodic traffic;
whether periodic reservation is enabled;
resource information for selection or reselection; and
resource information for re-evaluation or pre-emption.

Optionally, the first resource information satisfies at least one of the following:
in a case that the second data enables periodic reservation or is periodic traffic, the first resource information is determined based on at least one of first sensing of the second data, second sensing of the second data, and second sensing of the first data;
in a case that the second data does not enable periodic reservation or is aperiodic traffic, the first resource information is determined based on at least one of the second sensing of the second data and the second sensing of the first data; and
in a case that the second data does not enable periodic reservation or is aperiodic traffic, and that the second data satisfies a first preset condition, the first resource information is determined based on at least one of first sensing of the second data, second sensing of the second data, and second sensing of the first data; where the first preset condition includes at least one of the following: presence of second sensing and predictable time of arrival.

Optionally, in a case that the first resource information is associated with the resource information for selection or reselection for the second data, the first resource information satisfies any one of the following:
the first resource information is the same as the resource information for selection or reselection for the second data; and
the first resource information uses at least some sensing results corresponding to the resource information for selection or reselection for the second data.

Optionally, in a case that the first resource information is associated with the resource information for re-evaluation or pre-emption for the second data, the first resource information satisfies:
the first resource information is the same as the resource information for re-evaluation or pre-emption for the second data.

Optionally, the first resource information satisfies at least one of the following:
in a case that a priority of the first data is higher than or equal to a priority of the second data, resource exclusion is performed based on sensing results of the second data; and
in a case that the priority of the first data is lower than or equal to the priority of the second data, resource sensing is performed based on sensing results of the second data.

Optionally, in a case that a second preset condition is met, the first resource information is associated with the information related to the second data, where
the second preset condition includes at least one of the following:
a priority difference or an absolute value of the priority difference between the first data and the second data is less than a first threshold;
a delay budget difference or an absolute value of the delay budget difference between the first data and the second data is less than a second threshold;
a time interval between trigger resources of the first data and the second data is less than a third threshold;
a period difference or an absolute value of the period difference between the first data and the second data is less than a fourth threshold;
a number of resource overlaps between the first data and the second data is greater than a fifth threshold;
a resource overlap ratio between the first data and the second data is greater than a sixth threshold; and
a sensing window corresponding to the second data is located before resources selected or re-selected for the first data.

Optionally, in a case that the first resource information is associated with whether the first data is periodic traffic or whether the first data enables periodic reservation, the first resource information satisfies at least one of the following:
in a case that the first data is periodic traffic or that the first data enables periodic reservation, the first resource information is determined based on first sensing or based on the first sensing and second sensing; and
in a case that the first data is aperiodic traffic or that the first data does not enable periodic reservation, the first resource information is determined based on the second sensing or based on the first sensing and the second sensing.

Optionally, the first determining module 701 is specifically configured to determine the first resource information for re-evaluation or pre-emption for the first data, based on second target information agreed by protocol, pre-configured by a network-side device, configured by the network-side device, indicated by the network-side device, configured by a terminal-side device, pre-configured by the terminal-side device, or indicated by the terminal-side device.

Optionally, the second target information includes at least one of the following: a priority of the first data, a delay of the first data, a data delay budget PDB of the first data, a quality of service QoS parameter of the first data, a channel busy rate CBR, a channel occupancy ratio CR, a reference signal received power RSRP, a reference signal received quality RSRQ, a reference signal strength indication RSSI, a power saving mode of the terminal, a power level of the terminal, a DRX configuration, and a hybrid automatic repeat request acknowledgement.

Optionally, the transmission processing apparatus 700 further includes a third determining module configured to determine a priority of the first data.
in a case that the priority of the first data is higher than a seventh threshold, determining the first resource information for re-evaluation or pre-emption for the first data; and in a case that the priority of the first data is lower than or equal to the seventh threshold, skipping the operation of determining the first resource information for re-evaluation or pre-emption for the first data.

Optionally, in a case that the first resource information is determined based on first sensing, a first target window of the first sensing satisfies at least one of the following:
first window information of the first target window is agreed by protocol, configured by a network-side device, pre-configured by the network-side device, indicated by the network-side device, configured by a terminal-side device, pre-configured by the terminal-side device, or indicated by the terminal-side device, the first window information including a smallest length of the first sensing or at least one of a size, length, location, starting location and ending location of the first sensing;
the first target window is a sensing window corresponding to resource selection or re-selection;
the first target window is a sensing window located before m and satisfying a first sensing condition;
the first target window is a sensing window located before m-T11 and satisfying the first sensing condition;
the first target window is a sensing window located between n and m and satisfying the first sensing condition;
the first target window is a sensing window located between n and m-T11 and satisfying the first sensing condition; and
the first target window is a sensing window located between n+T22 and m-T11 and satisfying the first sensing condition; where
m represents a time unit of resources selected or re-selected for the first data, n represents a time unit of arrival of the first data or a time unit of resources selected or re-selected for the first data, T11 represents a third preset duration, and T22 represents a fourth preset duration.

Optionally, in a case that the first resource information is determined based on second sensing, a second target window of the second sensing satisfies at least one of the following:
second window information of the second target window is agreed by protocol, configured by a network-side device, pre-configured by the network-side device, indicated by the network-side device, configured by a terminal-side device, pre-configured by the terminal-side device, or indicated by the terminal-side device, the second window information including a smallest length of the second sensing or at least one of a size, length, location, starting location and ending location of the second sensing;
the second target window is a sensing window located before m-T11;
the second target window is a sensing window located after n+A; and
the second target window is between n+TA and n+TB; where
m represents a time unit of resources selected or re-selected for the first data, n represents a time unit of arrival of the first data or a time unit of resources selected or re-selected for the first data, T11 represents a third preset duration, A represents a fifth preset duration, TA represents a sixth preset duration, and TB represents a seventh preset duration.

Optionally, the first determining module 701 is specifically configured to perform the following operations:
in a case that the terminal determines, based on first sensing, the first resource information for re-evaluation or pre-emption for the first data, perform resource exclusion based on a period indication in side link control information SCI detected within a sensing window of the first sensing;
in a case that the terminal determines, based on first sensing, the first resource information for re-evaluation or pre-emption for the first data, perform resource exclusion based on a period indication and a time-frequency resource indication in SCI detected within a sensing window of the first sensing;
in a case that the terminal determines, based on second sensing, the first resource information for re-evaluation or pre-emption for the first data, perform resource exclusion based on a time-frequency resource indication in SCI detected within a sensing window of the second sensing; and
in a case that the terminal determines, based on second sensing, the first resource information for re-evaluation or pre-emption for the first data, perform resource exclusion based on a time-frequency resource indication and a period indication in SCI detected within a sensing window of the second sensing.

The transmission processing apparatus in this embodiment of this application can implement the processes in the method embodiment in FIG. 3. To avoid repetition, details are not repeated herein.

The transmission processing apparatus in this embodiment of this application may be an apparatus or an apparatus or electronic device having an operating system, or may be a component, an integrated circuit, or a chip in a terminal. The apparatus may be a mobile terminal or a non-mobile terminal. For example, the mobile terminal may include but is not limited to the foregoing illustrated types of terminals 11. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

Optionally, as shown in FIG. 8, an embodiment of this application further provides a communications device 800, including a processor 801, a memory 802, and a program or instructions stored in the memory 802 and capable of running on the processor 801. When the program or the instructions are executed by the processor 801, the processes of the foregoing embodiment of the transmission processing method are implemented, with the same technical effects achieved. To avoid repetition, details are not repeated herein.

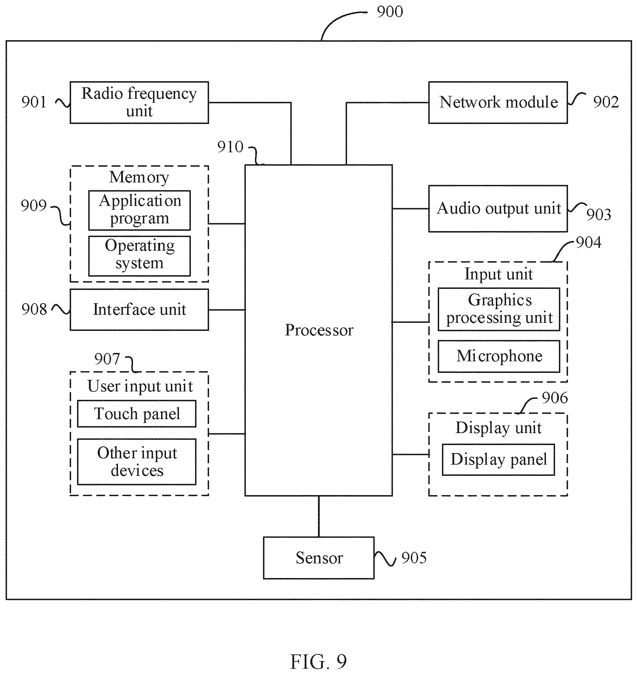

An embodiment of this application further provides a terminal, including a processor and a communications interface, where the processor is configured to determine first resource information for first data, the first resource information being used to re-evaluate or preempt a target resource, where the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part BWP; a power saving mode of the terminal; a power level of the terminal; a discontinuous reception DRX configuration of the terminal; third resource information configured or indicated in the resource pool; or information related to second data, the second data being different from the first data. This terminal embodiment corresponds to the foregoing method embodiment on the terminal side. All processes and implementations in the foregoing method embodiment can be applicable to this terminal embodiment, with the same technical effect achieved. Specifically, FIG. 9 is a schematic diagram of a hardware structure of a terminal for implementing embodiments of this application.

The terminal 900 includes but is not limited to at least some of the components such as a radio frequency unit 901, a network module 902, an audio output unit 903, an input unit 904, a sensor 905, a display unit 906, a user input unit 907, an interface unit 908, a memory 909, and a processor 910.

It can be understood by those skilled in the art that the terminal 900 may further include a power supply (for example, a battery) supplying power to the components. The power supply may be logically connected to the processor 910 via a power management system, so that functions such as charge management, discharge management, and power consumption management are implemented by using the power management system. The structure of the terminal shown in FIG. 9 does not constitute any limitation on the terminal. The terminal may include more or fewer components than shown in the figure, or combine some of the components, or arrange the components differently. Details are not repeated herein.

It should be understood that in this embodiment of this application, the input unit 904 may include a graphics processing unit (graphics processing unit, GPU) and a microphone. The graphics processing unit processes image data of a static picture or a video that is obtained by an image capture apparatus (for example, a camera) in an image capture mode or a video capture mode. The display unit 906 may include a display panel, and the display panel may be configured in a form of a liquid crystal display, an organic light-emitting diode, or the like. The user input unit 907 includes a touch panel and other input devices. The touch panel is also referred to as a touchscreen. The touch panel may include two parts: a touch detection apparatus and a touch controller. The other input devices may include but are not limited to a physical keyboard, a functional button (such as a volume control button or a power on/off button), a trackball, a mouse, and a joystick. Details are not described herein.

In this embodiment of this application, the radio frequency unit 901 transmits downlink information received from a network-side device to the processor 910 for processing, and in addition, transmits uplink data to the network-side device. Generally, the radio frequency unit 901 includes but is not limited to an antenna, at least one amplifier, a transceiver, a coupler, a low noise amplifier, and a duplexer.

The memory 909 may be configured to store software programs or instructions and various data. The memory 109 may mainly include a program or instruction storage area and a data storage area. The program or instruction storage area may store an operating system, an application program or instruction required by at least one function (for example, a sound play function and an image play function), and the like. In addition, the memory 909 may include a high-speed random access memory, and may further include a non-transitory memory, where the non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-transitory solid-state storage device.

The processor 910 may include one or more processing units. Optionally, the processor 910 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 910.

The processor 910 is configured to determine first resource information for first data, the first resource information being used to re-evaluate or preempt a target resource; where
the first resource information is associated with first target information, and the first target information includes at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part BWP; a power saving mode of a terminal; a power level of the terminal; a discontinuous reception DRX configuration of the terminal; third resource information configured or indicated in the resource pool; or information related to second data, the second data being different from the first data.

Optionally, the first resource information includes at least one of the following resource information: a resource selection method, a resource sensing method, to-be-sensed resources, a resource size, a minimum number of resource sizes, a maximum number of resource sizes, a resource location, a resource sensing trigger time, and a resource selection trigger time.

Optionally, in a case that the first resource information is associated with whether periodic reservation is enabled in the resource pool, the first resource information satisfies at least one of the following:
in a case that periodic reservation is enabled in the resource pool, the first resource information is determined based on first sensing or based on the first sensing and second sensing; and
in a case that periodic reservation is not enabled in the resource pool, the first resource information is determined based on the second sensing or based on the first sensing and the second sensing.

Optionally, in a case that the first resource information is associated with the second resource information, the first resource information satisfies at least one of the following:
a first target sensing mode used to determine the first resource information is the same as a second target sensing mode, where the second target sensing mode is used to determine the second resource information, and the second target sensing mode includes at least one of first sensing and second sensing;
a third target sensing mode usable for determining the first resource information includes the second target sensing mode;
in a case that the second resource information is determined based on third sensing, the first resource information is determined based on at least one of the first sensing and the second sensing; and
in a case that the second resource information includes randomly selected resources, the first resource information is determined based on at least one of the first sensing, the second sensing, and m-T33; where
a duration of the third sensing is longer than a sensing duration of the first sensing and a sensing duration of the second sensing, m represents a time unit of resources selected or re-selected for the first data, and T33 is a preset duration.

Optionally, the first resource information satisfies at least one of the following:
in a case that a power level of the terminal is greater than a power level corresponding to a first target object and less than or equal to a power level corresponding to a second target object, the first resource information is determined based on the m-T33;
in a case that the power level of the terminal is greater than the power level corresponding to the second target object and less than or equal to a power level corresponding to a third target object, the first resource information is determined based on the second sensing; and
in a case that the power level of the terminal is greater than the power level corresponding to the third target object, the first resource information is determined based on the second sensing or based on the second sensing and the first sensing; where
the power level corresponding to the third target object is greater than the power level corresponding to the second target object, the power level corresponding to the second target object is greater than the power level corresponding to the first target object, and the first target object, the second target object, and the third target object have different power levels or power saving modes.

Optionally, in a case that the first resource information is associated with the DRX configuration of the terminal, the first resource information satisfies at least one of the following:
in a case that a third preset condition is satisfied, the first resource information is determined based on second sensing; and
in a case that a third preset condition is not met, the first resource information is determined based on first sensing and second sensing; where
the third preset condition includes at least one of the following: the DRX is not enabled; a length of a DRX on duration is greater than a first preset duration; a length of a DRX off duration is less than a second preset duration; a proportion of the DRX on duration is greater than a first preset proportion; and a proportion of the DRX off duration is less than a second preset proportion.

Optionally, the information related to the second data includes at least one of the following:
whether being periodic traffic;
whether periodic reservation is enabled;
resource information for selection or reselection; and
resource information for re-evaluation or pre-emption.

Optionally, the first resource information satisfies at least one of the following:
in a case that the second data enables periodic reservation or is periodic traffic, the first resource information is determined based on at least one of first sensing of the second data, second sensing of the second data, and second sensing of the first data;
in a case that the second data does not enable periodic reservation or is aperiodic traffic, the first resource information is determined based on at least one of the second sensing of the second data and the second sensing of the first data; and
in a case that the second data does not enable periodic reservation or is aperiodic traffic, and that the second data satisfies a first preset condition, the first resource information is determined based on at least one of first sensing of the second data, second sensing of the second data, and second sensing of the first data; where the first preset condition includes at least one of the following: presence of second sensing and predictable time of arrival.

Optionally, in a case that the first resource information is associated with the resource information for selection or reselection for the second data, the first resource information satisfies any one of the following:
the first resource information is the same as the resource information for selection or reselection for the second data; and
the first resource information uses at least some sensing results corresponding to the resource information for selection or reselection for the second data.

Optionally, in a case that the first resource information is associated with the resource information for re-evaluation or pre-emption for the second data, the first resource information satisfies:
the first resource information is the same as the resource information for re-evaluation or pre-emption for the second data.

Optionally, the first resource information satisfies at least one of the following:
in a case that a priority of the first data is higher than or equal to a priority of the second data, resource exclusion is performed based on sensing results of the second data; and
in a case that the priority of the first data is lower than or equal to the priority of the second data, resource sensing is performed based on sensing results of the second data.

Optionally, in a case that a second preset condition is met, the first resource information is associated with the information related to the second data, where
the second preset condition includes at least one of the following:
a priority difference or an absolute value of the priority difference between the first data and the second data is less than a first threshold;
a delay budget difference or an absolute value of the delay budget difference between the first data and the second data is less than a second threshold;
a time interval between trigger resources of the first data and the second data is less than a third threshold;
a period difference or an absolute value of the period difference between the first data and the second data is less than a fourth threshold;
a number of resource overlaps between the first data and the second data is greater than a fifth threshold;
a resource overlap ratio between the first data and the second data is greater than a sixth threshold; and
a sensing window corresponding to the second data is located before resources selected or re-selected for the first data.

Optionally, in a case that the first resource information is associated with whether the first data is periodic traffic or whether the first data enables periodic reservation, the first resource information satisfies at least one of the following:
in a case that the first data is periodic traffic or that the first data enables periodic reservation, the first resource information is determined based on first sensing or based on the first sensing and second sensing; and
in a case that the first data is aperiodic traffic or that the first data does not enable periodic reservation, the first resource information is determined based on the second sensing or based on the first sensing and the second sensing.

Optionally, the processor 910 is specifically configured to determine the first resource information for re-evaluation or pre-emption for the first data, based on second target information agreed by protocol, pre-configured by a network-side device, configured by the network-side device, indicated by the network-side device, configured by a terminal-side device, pre-configured by the terminal-side device, or indicated by the terminal-side device.

Optionally, the second target information includes at least one of the following: a priority of the first data, a delay of the first data, a data delay budget PDB of the first data, a quality of service QoS parameter of the first data, a channel busy rate CBR, a channel occupancy ratio CR, a reference signal received power RSRP, a reference signal received quality RSRQ, a reference signal strength indication RSSI, a power saving mode of the terminal, a power level of the terminal, a DRX configuration, and a hybrid automatic repeat request acknowledgement.

Optionally, the processor 910 is configured to determine a priority of the first data; where
in a case that the priority of the first data is higher than a seventh threshold, determining the first resource information for re-evaluation or pre-emption for the first data; and in a case that the priority of the first data is lower than or equal to the seventh threshold, skipping the operation of determining the first resource information for re-evaluation or pre-emption for the first data.

Optionally, in a case that the first resource information is determined based on first sensing, a first target window of the first sensing satisfies at least one of the following:
first window information of the first target window is agreed by protocol, configured by a network-side device, pre-configured by the network-side device, indicated by the network-side device, configured by a terminal-side device, pre-configured by the terminal-side device, or indicated by the terminal-side device, the first window information including a smallest length of the first sensing or at least one of a size, length, location, starting location and ending location of the first sensing;
the first target window is a sensing window corresponding to resource selection or re-selection;
the first target window is a sensing window located before m and satisfying a first sensing condition;
the first target window is a sensing window located before m-T11 and satisfying the first sensing condition;
the first target window is a sensing window located between n and m and satisfying the first sensing condition;
the first target window is a sensing window located between n and m-T11 and satisfying the first sensing condition; and
the first target window is a sensing window located between n+T22 and m-T11 and satisfying the first sensing condition; where
m represents a time unit of resources selected or re-selected for the first data, n represents a time unit of arrival of the first data or a time unit of resources selected or re-selected for the first data, T11 represents a third preset duration, and T22 represents a fourth preset duration.

Optionally, in a case that the first resource information is determined based on second sensing, a second target window of the second sensing satisfies at least one of the following:
second window information of the second target window is agreed by protocol, configured by a network-side device, pre-configured by the network-side device, indicated by the network-side device, configured by a terminal-side device, pre-configured by the terminal-side device, or indicated by the terminal-side device, the second window information including a smallest length of the second sensing or at least one of a size, length, location, starting location and ending location of the second sensing;
the second target window is a sensing window located before m-T11;
the second target window is a sensing window located after n+A; and
the second target window is between n+TA and n+TB; where
m represents a time unit of resources selected or re-selected for the first data, n represents a time unit of arrival of the first data or a time unit of resources selected or re-selected for the first data, T11 represents a third preset duration, A represents a fifth preset duration, TA represents a sixth preset duration, and TB represents a seventh preset duration.

Optionally, the processor 910 is specifically configured to perform the following operations:
in a case that the terminal determines, based on first sensing, the first resource information for re-evaluation or pre-emption for the first data, perform resource exclusion based on a period indication in side link control information SCI detected within a sensing window of the first sensing;
in a case that the terminal determines, based on first sensing, the first resource information for re-evaluation or pre-emption for the first data, perform resource exclusion based on a period indication and a time-frequency resource indication in SCI detected within a sensing window of the first sensing;
in a case that the terminal determines, based on second sensing, the first resource information for re-evaluation or pre-emption for the first data, perform resource exclusion based on a time-frequency resource indication in SCI detected within a sensing window of the second sensing; and
in a case that the terminal determines, based on second sensing, the first resource information for re-evaluation or pre-emption for the first data, perform resource exclusion based on a time-frequency resource indication and a period indication in SCI detected within a sensing window of the second sensing.

An embodiment of this application further provides a readable storage medium, where a program or instructions are stored in the readable storage medium. When the program or instructions are executed by a processor, the processes of the foregoing embodiments of the transmission processing method can be implemented, with the same technical effects achieved. To avoid repetition, details are not repeated herein.

The processor is the processor in the electronic device in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communications interface, the communications interface is coupled to the processor, and the processor is configured to run a program or instructions to implement the processes of the foregoing transmission processing method embodiment, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a non-transitory storage medium. When the computer program product is executed by at least one processor, the processes of the foregoing embodiments of the transmission processing method are implemented, with the same technical effects achieved. To avoid repetition, details are not repeated herein.

An embodiment of this application further provides a communications device, configured to execute the processes of the foregoing embodiments of the transmission processing method, with the same technical effects achieved. To avoid repetition, details are not repeated herein.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. In the absence of more restrictions, an element preceded by "including a ..." does not preclude another same element in the process, method, article, or apparatus that includes the element. In addition, it should be noted that the scope of the method and apparatus in the embodiments of this application is not limited to performing functions in the order shown or discussed, but may further include performing functions at substantially concurrently or in reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the methods in the foregoing embodiments may be implemented by software with a necessary general hardware platform. Certainly, the methods in the foregoing embodiments may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. A transmission processing method, comprising:
determining, by a terminal, first resource information for first data, the first resource information being used to re-evaluate or preempt a target resource; wherein
the first resource information is associated with first target information, and the first target information comprises at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part BWP; a power saving mode of the terminal; a power level of the terminal; a discontinuous reception DRX configuration of the terminal; third resource information configured or indicated in the resource pool; or information related to second data, the second data being different from the first data.

2. The method according to claim 1, wherein the first resource information comprises at least one of the following resource information: a resource selection method, a resource sensing method, to-be-sensed resources, a resource size, a minimum number of resource sizes, a maximum number of resource sizes, a resource location, a resource sensing trigger time, and a resource selection trigger time.

3. The method according to claim 1, wherein in a case that the first resource information is associated with whether periodic reservation is enabled in the resource pool, the first resource information satisfies at least one of the following:
in a case that periodic reservation is enabled in the resource pool, the first resource information is determined based on first sensing or based on the first sensing and second sensing; and
in a case that periodic reservation is not enabled in the resource pool, the first resource information is determined based on the second sensing or based on the first sensing and the second sensing.

4. The method according to claim 1, wherein in a case that the first resource information is associated with the second resource information, the first resource information satisfies at least one of the following:
a first target sensing mode used to determine the first resource information is the same as a second target sensing mode, wherein the second target sensing mode is used to determine the second resource information, and the second target sensing mode comprises at least one of first sensing and second sensing;
a third target sensing mode usable for determining the first resource information comprises the second target sensing mode;
in a case that the second resource information is determined based on third sensing, the first resource information is determined based on at least one of the first sensing and the second sensing; and
in a case that the second resource information comprises randomly selected resources, the first resource information is determined based on at least one of the first sensing, the second sensing, and m-T33; wherein
a duration of the third sensing is longer than a sensing duration of the first sensing and a sensing duration of the second sensing, m represents a time unit of resources for selection or reselection for the first data, and T33 is a preset duration.

5. The method according to claim 1, wherein the first resource information satisfies at least one of the following:
in a case that a power level of the terminal is greater than a power level corresponding to a first target object and less than or equal to a power level corresponding to a second target object, the first resource information is determined based on the m-T33;
in a case that the power level of the terminal is greater than the power level corresponding to the second target object and less than or equal to a power level corresponding to a third target object, the first resource information is determined based on the second sensing; and
in a case that the power level of the terminal is greater than the power level corresponding to the third target object, the first resource information is determined based on the second sensing or based on the second sensing and the first sensing; wherein
the power level corresponding to the third target object is greater than the power level corresponding to the second target object, the power level corresponding to the second target object is greater than the power level corresponding to the first target object, and the first target object, the second target object, and the third target object have different power levels or power saving modes.

6. The method according to claim 1, wherein in a case that the first resource information is associated with the DRX configuration of the terminal, the first resource information satisfies at least one of the following:
in a case that a third preset condition is satisfied, the first resource information is determined based on second sensing; and
in a case that a third preset condition is not met, the first resource information is determined based on first sensing and second sensing; wherein
the third preset condition comprises at least one of the following: the DRX is not enabled; a length of a DRX on duration is greater than a first preset duration; a length of a DRX off duration is less than a second preset duration; a proportion of the DRX on duration is greater than a first preset proportion; and a proportion of the DRX off duration is less than a second preset proportion.

7. The method according to claim 1, wherein the information related to the second data comprises at least one of the following:
whether being periodic traffic;
whether periodic reservation is enabled;
resource information for selection or reselection; and
resource information for re-evaluation or pre-emption.

8. The method according to claim 7, wherein the first resource information satisfies at least one of the following:
in a case that the second data enables periodic reservation or is periodic traffic, the first resource information is determined based on at least one of first sensing of the second data, second sensing of the second data, and second sensing of the first data;
in a case that the second data does not enable periodic reservation or is aperiodic traffic, the first resource information is determined based on at least one of the second sensing of the second data and the second sensing of the first data; and
in a case that the second data does not enable periodic reservation or is aperiodic traffic, and that the second data satisfies a first preset condition, the first resource information is determined based on at least one of first sensing of the second data, second sensing of the second data, and second sensing of the first data; wherein the first preset condition comprises at least one of the following: presence of second sensing and predictable time of arrival.

9. The method according to claim 7, wherein in a case that the first resource information is associated with the resource information for selection or reselection for the second data, the first resource information satisfies any one of the following:
the first resource information is the same as the resource information for selection or reselection for the second data; and
the first resource information uses at least some sensing results corresponding to the resource information for selection or reselection for the second data.

10. The method according to claim 7, wherein in a case that the first resource information is associated with the resource information for re-evaluation or pre-emption for the second data, the first resource information satisfies:
the first resource information is the same as the resource information for re-evaluation or pre-emption for the second data.

11. The method according to claim 1, wherein the first resource information satisfies at least one of the following:
in a case that a priority of the first data is higher than or equal to a priority of the second data, resource exclusion is performed based on sensing results of the second data; and
in a case that the priority of the first data is lower than or equal to the priority of the second data, resource sensing is performed based on sensing results of the second data.

12. The method according to claim 1, wherein in a case that a second preset condition is satisfied, the first resource information is associated with the information related to the second data, wherein
the second preset condition comprises at least one of the following:
a priority difference or an absolute value of the priority difference between the first data and the second data is less than a first threshold;
a delay budget difference or an absolute value of the delay budget difference between the first data and the second data is less than a second threshold;
a time interval between trigger resources of the first data and the second data is less than a third threshold;
a period difference or an absolute value of the period difference between the first data and the second data is less than a fourth threshold;
a number of resource overlaps between the first data and the second data is greater than a fifth threshold;
a resource overlap ratio between the first data and the second data is greater than a sixth threshold; and
a sensing window corresponding to the second data is located before resources selected or re-selected for the first data.

13. The method according to claim 1, wherein in a case that the first resource information is associated with whether the first data is periodic traffic or whether the first data enables periodic reservation, the first resource information satisfies at least one of the following:
in a case that the first data is periodic traffic or that the first data enables periodic reservation, the first resource information is determined based on first sensing or based on the first sensing and second sensing; and
in a case that the first data is aperiodic traffic or that the first data does not enable periodic reservation, the first resource information is determined based on the second sensing or based on the first sensing and the second sensing.

14. The method according to claim 1, wherein determining, by the terminal, the first resource information for re-evaluation or pre-emption for the first data comprises:
determining, by the terminal, the first resource information for re-evaluation or pre-emption for the first data, based on second target information agreed by protocol, pre-configured by a network-side device, configured by the network-side device, indicated by the network-side device, configured by a terminal-side device, pre-configured by the terminal-side device, or indicated by the terminal-side device.

15. The method according to claim 14, wherein the second target information comprises at least one of the following: a priority of the first data, a delay of the first data, a data delay budget PDB of the first data, a quality of service QoS parameter of the first data, a channel busy rate CBR, a channel occupancy ratio CR, a reference signal received power RSRP, a reference signal received quality RSRQ, a reference signal strength indication RSSI, a power saving mode of the terminal, a power level of the terminal, a DRX configuration, and a hybrid automatic repeat request acknowledgement.

16. The method according to claim 1, wherein before determining, by the terminal, the first resource information for re-evaluation or pre-emption for the first data, the method further comprises:
determining a priority of the first data; wherein
in a case that the priority of the first data is higher than a seventh threshold, determining the first resource information for re-evaluation or pre-emption for the first data; and in a case that the priority of the first data is lower than or equal to the seventh threshold, skipping the operation of determining the first resource information for re-evaluation or pre-emption for the first data.

17. The method according to claim 1, wherein in a case that the first resource information is determined based on first sensing, a first target window of the first sensing satisfies at least one of the following:
first window information of the first target window is agreed by protocol, configured by a network-side device, pre-configured by the network-side device, indicated by the network-side device, configured by a terminal-side device, pre-configured by the terminal-side device, or indicated by the terminal-side device, the first window information comprising a smallest length of the first sensing or at least one of a size, length, location, starting location and ending location of the first sensing;
the first target window is a sensing window corresponding to resource selection or re-selection;
the first target window is a sensing window located before m and satisfying a first sensing condition;
the first target window is a sensing window located before m-T11 and satisfying the first sensing condition;
the first target window is a sensing window located between n and m and satisfying the first sensing condition;
the first target window is a sensing window located between n and m-T11 and satisfying the first sensing condition; and
the first target window is a sensing window located between n+T22 and m-T11 and satisfying the first sensing condition; wherein
m represents a time unit of resources selected or re-selected for the first data, n represents a time unit of arrival of the first data or a time unit of resources selected or re-selected for the first data, T11 represents a third preset duration, and T22 represents a fourth preset duration.

18. The method according to claim 1, wherein in a case that the first resource information is determined based on second sensing, a second target window of the second sensing satisfies at least one of the following:
second window information of the second target window is agreed by protocol, configured by a network-side device, pre-configured by the network-side device, indicated by the network-side device, configured by a terminal-side device, pre-configured by the terminal-side device, or indicated by the terminal-side device, the second window information comprising a smallest length of the second sensing or at least one of a size, length, location, starting location and ending location of the second sensing;
the second target window is a sensing window located before m-T11;
the second target window is a sensing window located after n+A; and
the second target window is between n+TA and n+TB; wherein
m represents a time unit of resources selected or re-selected for the first data, n represents a time unit of arrival of the first data or a time unit of resources selected or re-selected for the first data, T11 represents a third preset duration, A represents a fifth preset duration, TA represents a sixth preset duration, and TB represents a seventh preset duration.

19. The method according to claim 1, wherein determining, by the terminal, the first resource information for re-evaluation or pre-emption for the first data comprises:
in a case that the terminal determines, based on first sensing, the first resource information for re-evaluation or pre-emption for the first data, the terminal performs resource exclusion based on a period indication in side link control information SCI detected within a sensing window of the first sensing;
in a case that the terminal determines, based on first sensing, the first resource information for re-evaluation or pre-emption for the first data, the terminal performs resource exclusion based on a period indication and a time-frequency resource indication in SCI detected within a sensing window of the first sensing;
in a case that the terminal determines, based on second sensing, the first resource information for re-evaluation or pre-emption for the first data, the terminal performs resource exclusion based on a time-frequency resource indication in SCI detected within a sensing window of the second sensing; and
in a case that the terminal determines, based on second sensing, the first resource information for re-evaluation or pre-emption for the first data, the terminal performs resource exclusion based on a time-frequency resource indication and a period indication in SCI detected within a sensing window of the second sensing.

20. A transmission processing apparatus, comprising:
a first determining module configured to determine first resource information for first data, the first resource information being used to re-evaluate or preempt a target resource; wherein
the first resource information is associated with first target information, and the first target information comprises at least one of the following: whether the first data is periodic traffic or whether the first data enables periodic reservation; whether periodic reservation is enabled in a resource pool; a periodicity of a resource pool configuration; second resource information for selection or reselection for the first data; a measurement result of the resource pool or a bandwidth part BWP; a power saving mode of a terminal; a power level of the terminal; a discontinuous reception DRX configuration of the terminal; third resource information configured or indicated in the resource pool; or information related to second data, the second data being different from the first data.

21. The apparatus according to claim 20, wherein the first resource information comprises at least one of the following resource information: a resource selection method, a resource sensing method, to-be-sensed resources, a resource size, a minimum number of resource sizes, a maximum number of resource sizes, a resource location, a resource sensing trigger time, and a resource selection trigger time.

22. The apparatus according to claim 20, wherein in a case that the first resource information is associated with whether periodic reservation is enabled in the resource pool, the first resource information satisfies at least one of the following:
in a case that periodic reservation is enabled in the resource pool, the first resource information is determined based on first sensing or based on the first sensing and second sensing; and
in a case that periodic reservation is not enabled in the resource pool, the first resource information is determined based on the second sensing or based on the first sensing and the second sensing.

23. The apparatus according to claim 20, wherein in a case that the first resource information is associated with the second resource information, the first resource information satisfies at least one of the following:
a first target sensing mode used to determine the first resource information is the same as a second target sensing mode, wherein the second target sensing mode is used to determine the second resource information, and the second target sensing mode comprises at least one of first sensing and second sensing;
a third target sensing mode usable for determining the first resource information comprises the second target sensing mode;
in a case that the second resource information is determined based on third sensing, the first resource information is determined based on at least one of the first sensing and the second sensing; and
in a case that the second resource information comprises randomly selected resources, the first resource information is determined based on at least one of the first sensing, the second sensing, and m-T33; wherein
a duration of the third sensing is longer than a sensing duration of the first sensing and a sensing duration of the second sensing, m represents a time unit of resources selected or re-selected for the first data, and T33 is a preset duration.

24. A terminal, comprising a memory, a processor, and a program stored in the memory and capable of running on the processor, wherein when the program is executed by the processor, the steps of the transmission processing method according to any one of claims 1 to 19 are implemented.

25. A readable storage medium, wherein the readable storage medium has a program or instructions stored thereon, and when the program or instructions are executed by a processor, the steps of the transmission processing method according to any one of claims 1 to 19 are implemented.

26. A chip, wherein the chip comprises a processor and a communications interface, the communications interface is coupled to the processor, and the processor is configured to run a program or instructions to implement the steps of the transmission processing method according to any one of claims 1 to 19.

27. A computer program product, wherein the computer program product is stored in a non-transient storage medium, and the computer program product is executed by at least one processor so as to implement the steps of the transmission processing method according to any one of claims 1 to 19.

28. A communications device configured to perform the steps of the transmission processing method according to any one of claims 1 to 19.
